# EUROPEAN PATENT SPECIFICATION

(11) **EP 2 680 224 B1**
(45) Date of publication and mention of the grant of the patent: **07.01.2015**
(21) Application number: 12173823.1
(22) Date of filing: 27.06.2012
(51) Int. Cl.: G06T 7/00

(54) **Method and device for determining a depth image**
Verfahren und Vorrichtung zur Bestimmung eines Tiefenbildes
Procédé et dispositif de détermination d'une image de profondeur

(43) Date of publication of application: 01.01.2014
(73) Proprietor: Vestel Elektronik Sanayi ve Ticaret A.S., 45030 Manisa (TR)
(72) Inventor: Bastug, Ahmet, 45030 Manisa (TR); Ozer, Nuri, 45030 Manisa (TR)
(74) Representative: Cayli, Hülya

(56) References cited:
- WO-A2-2007/063478
- US-B1- 6 584 219

## Description

Various embodiments relate generally to image processing. Furthermore, various embodiments relate to a method and a device for determining a depth image.

With the development and success of three-dimensional (3D) technologies, its application is not limited to 3D movies in theaters, but is extending to home electronics, such as 3D TVs and other 3D consumer products. 3D vision or stereoscopic vision may usually be created by presenting two slightly different sets of images to a viewer, wherein one set includes left eye images corresponding to a left eye viewpoint and the other set includes right eye images corresponding to a right eye viewpoint. 3D displays (e.g., CRT, LCD, Plasma, etc.) show left eye and right eye views on the same surface, and by temporal or spatial multiplexing, make the left eye of a viewer only see the left eye view and the right eye only see the right-eye view. Disparities between the two views provide a vision with depth perception to the viewer, and make the viewer perceive a stereoscopic view.

Two-dimensional (2D) images with multiple viewpoints are usually necessary to provide a 3D image or video with depth information. However, accessible 3D content is insufficient, e.g. limited to a few sports and documentary broadcasts obtained by expensive subscription fees, due to expensive costs for shooting 3D films and preparing 3D stereo video.

In situations wherein only 2D content is available, a possible solution is to create 3D content from 2D content by computing depth map of the image frames. In the computation of depth maps for image frames, noise remains a problem that needs to be considered in order to determine accurate depth maps.

Patent document US6584219B1 discloses a system for 2D/3D image conversion. Said system comprises target phase value calculating means for calculating a target phase value per parallax calculation region based on a dynamic range of a preset target phase value and depth information per given unit area generated by depth information generating means; real phase value calculating means which calculates a current real phase value per parallax calculation region in a manner to progressively approximate a real phase value to a target phase value of a parallax calculation region with a corresponding previous real phase value and then determines a current real phase value per given unit area based on the current real phase value per parallax calculation region thus obtained; and phase control means for producing a first image signal and a second image signal from a signal residing in each given unit area of the 2D input image, the first and second image signals having a horizontal phase difference therebetween based on the current real phase value corresponding to the given unit area.

Another patent document WO2007063478A2 discloses a method and an apparatus for stereoscopic image display. According to this document, a 2D image data is converted to 3D image data. During said conversion, the image is divided, on the basis of focusing characteristics, into two or more regions, it is determined to which region an edge separating two regions belongs. The regions are depth ordered in accordance with the rule that the rule that a region comprising an edge is closer to the viewer than an adjacent region and to the regions 3-D depth information is assigned in accordance with the established depth order of the regions. Preferably to each of the regions a depth is assigned in dependence on an average or median focusing characteristic of the region.

Various embodiments provide a method and a device for determining a depth image for a digital image.

Various embodiments provide a method for determining a depth image for a digital image including a plurality of picture elements. The method may include edge filtering the digital image to determine an edge map, wherein the edge map includes a plurality of edge values and each edge value is associated with at least one picture element; determining for each edge map region of a plurality of edge map regions an edge map region metric; determining for each edge map region as to whether the respective edge region metric fulfills a predefined criterion; determining the number of edge map regions for which the respective edge map region metric fulfills the predefined criterion as a first value; determining the number of edge map regions for which the respective edge map region metric does not fulfill the predefined criterion as a second value; and determining the depth image using the first value and the second value.

Various embodiments provide a method and a device for determining a depth image for a digital image. Embodiments provide more accurate depth information for 2D image or video, such that 2D image or video may be converted to 3D image or video using the determined depth image.

Various embodiments are directed to a method for determining a depth image for a digital image including a plurality of picture elements (also referred to as pixels). The method may include edge filtering the digital image to determine an edge map, wherein the edge map includes a plurality of edge values and each edge value is associated with at least one picture element; determining for each edge map region of a plurality of edge map regions an edge map region metric; determining for each edge map region as to whether the respective edge region metric fulfills a predefined criterion; determining the number of edge map regions for which the respective edge map region metric fulfills the predefined criterion as a first value; determining the number of edge map regions for which the respective edge map region metric does not fulfill the predefined criterion as a second value; and determining the depth image using the first value and the second value.

The digital image may be a 2D image, e.g. an image captured by a camera from a single viewpoint. The digital image may be an image frame of a video including a sequence of image frames. For the purpose of simplicity, the method and device in this description is described with regard to images, but it is understood that the method and device of the embodiments may apply similarly to each image frame of the video to process the entire video.

In an embodiment, the edge filtering may include maximum-minimum filtering, based on the difference between a maximum value and a minimum value within a predefined image region. For example, for each picture element of the digital image, a maximum picture element value associated with a picture element in a predefined neighboring region of the respective picture element and a minimum picture element value associated with a picture element in a predefined neighboring region of the respective picture element may be determined, and a difference value between the maximum picture element value and the minimum picture element value may be determined. The edge value associated with the picture element may be determined based on the difference value. In other embodiments, the edge filtering may use other filtering suitable for detecting the edges, such as maximum filtering and average filtering, for example. In some embodiments, the edge filtering may include a Canny edge detector, a Sobel operator, or any other suitable edge detection algorithms.

In an embodiment, the digital image may be divided into a plurality of blocks, wherein each block includes a plurality of pixel elements. Each determined edge value may be associated with a block of pixel elements.

In one embodiment, the digital image may be a grayscale image. The picture element value used in edge filtering may refer to the intensity value of the picture element in the grayscale image.

In another embodiment, the digital image may be a color image, which may be represented using existing color models, such as RGB (red, green, blue) and CMYK (cyan, magenta, yellow and key) color model, wherein respective color values (in general picture element values) are associated with one or more picture elements. The picture element value used in edge filtering may refer to a weighted average value of the color component values. In an illustrative example wherein the digital image is a RGB image, the RGB image may be converted to YC_{b}Cᵣ color space, including a Y component representing the luminance component and C_{B} and C_{R} components representing the blue-difference and red-difference chrominance components. In this example, the picture element value used in the edge filtering may refer to the Y component value of the picture element in the color image.

According to an embodiment, in determining the depth image, for each picture element associated with a depth value, it may be determined as to whether the picture element is located in an edge map region for which the respective edge map region metric fulfills the predefined criterion. In case the picture element is located in an edge map region for which the respective edge map region metric fulfills the predefined criterion, the associated depth value may be reduced by a first noise floor adaptation value to determine a noise floor adapted depth value. In case the picture element is located in an edge map region for which the respective edge map region metric does not fulfill the predefined criterion, the associated depth value may be reduced by a second noise floor adaptation value to determine a noise floor adapted depth value. The second noise floor adaptation value may be smaller than the first noise floor adaptation value. The depth image may include the respectively determined noise floor adapted depth values.

According to an embodiment, the edge map region metric for each edge map region may include the number of high edge values and the number of low edge values in the respective edge map region. In this embodiment, the high edge values may represent the edge values higher than a predetermined high threshold (e.g. a threshold value of 96), and the low edge values may represent the edge values lower than a predetermined low threshold (e.g. a threshold value of 6).

In an embodiment, the predefined criterion may be whether the edge map region metric exceeds a first predefined edge threshold value. In an illustrative embodiment, determining whether the edge map region metric fulfills the predefined criterion may include determining whether the number of high edge values exceeds the first predefined edge threshold value. If the number of high edge values exceeds the first predefined edge threshold value, the associated edge map region may be referred to as a high frequency region, indicating that the edge map region includes sufficient number of high edge values.

In a further embodiment, the edge map region metric not fulfilling the predefined criterion may be whether the edge map region metric exceeds a second predefined edge threshold value. The second predefined edge threshold value may be different from the first predefined edge threshold value. In an illustrative embodiment, whether the edge map region metric exceeds the second predefined edge threshold value may include whether the number of low edge values in the edge map region metric exceeds the second predefined edge threshold value. If the number of low edge values exceeds the first predefined edge threshold value, the associated edge map region may be referred to as a low frequency region, indicating that the edge map region includes sufficient number of low edge values.

According to a further embodiment, in determining the depth image, it may be determined as to whether the digital image is a high frequency image or a low frequency image based on the first value and the second value. In case the digital image is neither a high frequency image nor a low frequency image, a respective depth scaled value may be determined for each depth value associated with a picture element by reducing the depth value by a first depth scale. In case the digital image is either a high frequency image or a low frequency image, a respective depth scaled value may be determined for each depth value associated with a picture element by reducing the depth value by a second depth scale. The first depth scale may be smaller than the second depth scale.

In an embodiment, the digital image may be determined to be a high frequency image in case the first value exceeds a first frequency threshold value. In an embodiment, the first value may represent the number of edge map regions in which the respective number of high edge values exceeds the first predefined edge threshold value, i.e. the number of high frequency regions.

In another embodiment, the digital image may be determined to be a low frequency image in case the second value exceeds a second frequency threshold value. The second frequency threshold value may be different from the first frequency threshold value. The second value may represent the number of edge map regions in which the respective number of low edge values exceeds the second predefined edge threshold value, i.e. the number of low frequency regions.

In an embodiment, the depth image may be determined using the first value and the second value. In one embodiment, the depth image may be determined based on the edge map via a piece-wise linear mapping function. In another embodiment, the depth image may be determined based on the edge map via a S-curve mapping function. Other suitable mapping functions may also be used in other embodiments.

Another embodiment is directed to a device for determining a depth image for a digital image including a plurality of picture elements (also referred to as pixels). The device may include an edge filter configured to filter the digital image to determine an edge map, wherein the edge map includes a plurality of edge values and each edge value is associated with at least one picture element. The device may further include a processor configured to determine for each edge map region of a plurality of edge map regions an edge map region metric; determine for each edge map region as to whether the respective edge map region metric fulfills a predefined criterion; determine the number of edge map regions for which the respective edge map region metric fulfills the predefined criterion as a first value; determine the number of edge map regions for which the respective edge map region metric does not fulfill the predefined criterion as a second value ; and determining the depth image using the first value and the second value.

According to an embodiment, the processor may be configured to determine the depth image, including determining for each picture element associated with a depth value as to whether the picture element is located in an edge map region for which the respective edge map region metric fulfills the predefined criterion. In case the picture element is located in an edge map region for which the respective edge map region metric fulfills the predefined criterion, the associated depth value may be reduced by a first noise floor adaptation value to determine a noise floor adapted depth value. In case the picture element is located in an edge map region for which the respective edge map region metric does not fulfill the predefined criterion, the associated depth value may be reduced by a second noise floor adaptation value to determine a noise floor adapted depth value. The second noise floor adaptation value may be smaller than the first noise floor adaptation value. The depth image may include the respectively determined noise floor adapted depth values.

In an embodiment, the predefined criterion may be whether the edge map region metric exceeds a first predefined edge threshold value. In an illustrative embodiment, determining whether the edge map region metric fulfills the predefined criterion may include determining whether the number of high edge values exceeds the first predefined edge threshold value. If the number of high edge values exceeds the first predefined edge threshold value, the associated edge map region may be referred to as a high frequency region, indicating that the edge map region includes sufficient number of high edge values.

In a further embodiment, the edge map region metric not fulfilling the predefined criterion may be whether the edge map region metric exceeds a second predefined edge threshold value. The second predefined edge threshold value may be different from the first predefined edge threshold value. In an illustrative embodiment, whether the edge map region metric exceeds the second predefined edge threshold value may include whether the number of low edge values in the edge map region metric exceeds the second predefined edge threshold value. If the number of low edge values exceeds the first predefined edge threshold value, the associated edge map region may be referred to as a low frequency region, indicating that the edge map region includes sufficient number of low edge values.

According to a further embodiment, the processor may be configured to determine as to whether the digital image is a high frequency image or a low frequency image based on the first value and the second value. In case the digital image is neither a high frequency image nor a low frequency image, a respective depth scaled value may be determined for each depth value associated with a picture element by reducing the depth value by a first depth scale. In case the digital image is either a high frequency image or a low frequency image, a respective depth scaled value may be determined for each depth value associated with a picture element by reducing the depth value by a second depth scale. The first depth scale may be smaller than the second depth scale.

In an embodiment, the processor may be configured to determine that the digital image is a high frequency image in case the first value exceeds a first frequency threshold value. In an embodiment, the first value may represent the number of edge map regions in which the respective number of high edge values exceeds the first predefined edge threshold value, i.e. the number of high frequency regions.

In another embodiment, the processor may be configured to determine that the digital image is a low frequency image in case the second value exceeds a second frequency threshold value. The second frequency threshold value may be different from the first frequency threshold value. The second value may represent the number of edge map regions in which the respective number of low edge values exceeds the second predefined edge threshold value, i.e. the number of low frequency regions.

Various embodiments described in the context of the method for determining a depth image for a digital image are analogously valid for the device, and vice versa.

The filter and circuit, such as the edge filter and the processor, may each be configured to carry out the functions described in the method of various embodiments above.

In an embodiment, the various "filter" and "processor" comprised in the device and a "circuit" may be understood as any kind of a logic implementing entity, which may be special purpose circuitry or a processor executing software stored in a memory, firmware, or any combination thereof. Thus, in an embodiment, a "filter", "processor" or "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "filter", "processor" or "circuit" may also be a processor executing software, e.g. any kind of computer program, e.g. a computer program using a virtual machine code such as e.g. Java. Any other kind of implementation of the respective functions described in the embodiments in this description may also be understood as a "filter", "processor" or "circuit" in accordance with an alternative embodiment.

In an embodiment, the device for determining a depth image may be a circuit described above configured to perform the method for determining a depth image for a digital image.

In another embodiment, a computer readable medium having a program stored thereon may be provided, wherein the program is to make a computer execute a method described in the above embodiments. The computer readable medium may include any data storage device, such as read-only memory (ROM), random-access memory (RAM), CD-ROMs, magnetic tapes, floppy disks and optical data storage devices.

In this context, the device as described in this description may include a memory which is for example used in the processing carried out by the device. A memory used in the embodiments may be a volatile memory, for example a DRAM (Dynamic Random Access Memory), or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
Fig. 1 shows a schematic diagram of a device according to an embodiment.
Fig. 2 shows a flow diagram according to an embodiment.
Fig. 3 shows a flow diagram according to another embodiment.
Fig. 4 shows a flow diagram illustrating the determination of different edge numbers according to an embodiment.
Fig. 5 shows a flow diagram illustrating the determination of different edge regions according to an embodiment.
Fig. 6 shows a flow diagram illustrating the classification of the digital image according to an embodiment.
Fig. 7 shows a flow diagram illustrating the classification of the edge map regions according to an embodiment.
Fig. 8 shows a flow diagram illustrating the determination of depth scale according to an embodiment.
Fig. 9 shows a flow diagram illustrating the determination of noise floor adaptation values according to an embodiment.
Fig. 10 shows a flow diagram illustrating the noise floor and depth scale adaptation according to an embodiment.
Fig. 11 illustrates a mapping function between an edge map and a depth map according to an embodiment.
Fig. 12 shows an image system according to an embodiment.

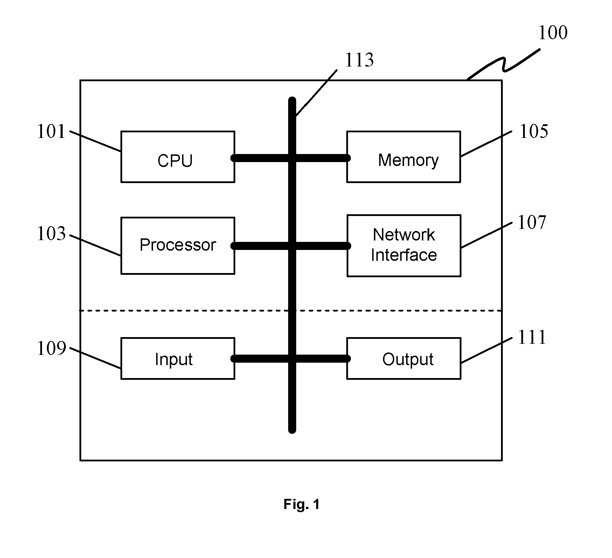

FIG. 1 shows a schematic diagram of a device for determining a depth image according to various embodiments.

The device 100 may be implemented by a computer system. In various embodiments, the edge filter and the processor may also be implemented as modules executing on one or more computer systems. The computer system may include a CPU 101 (central processing unit), a processor 103, a memory 105, a network interface 107, input interface/devices 109 and output interface/devices 111. All the components 101, 103, 105, 107, 109, 111 of the computer system 100 may be connected and communicating with each other through a computer bus 113.

The memory 105 may be used as for storing digital images, edge maps, noise floor adapted depth values, depth scaled values, depth images, threshold values, and intermediate values used and determined according to the method of the embodiments. The memory 105 may include more than one memory, such as RAM, ROM, EPROM, hard disk, etc. wherein some of the memories are used for storing data and programs and other memories are used as working memories.

In an embodiment, the memory 105 may be configured to store instructions for determining the depth image for the digital image according to various embodiments. The instructions, when executed by the CPU 101, may cause the CPU 101 to edge filter the digital image; determine for each edge map region of a plurality of edge map regions an edge map region metric; determine for each edge map region as to whether the respective edge map region metric fulfills a predefined criterion; determine the number of edge map regions for which the respective edge map region metric fulfills the predefined criterion as a first value; determine the number of edge map regions for which the respective edge map region metric does not fulfill the predefined criterion as a second value; and determining the depth image using the first value and the second value. The instruction may also cause the CPU 101 to store the digital images, the edge maps, noise floor adapted depth values, depth scaled values, threshold values, intermediate values, and the depth image determined according to the method of the embodiments in the memory 105.

In another embodiment, the processor 103 may be a special purpose processor, in this example, an image processor, for executing the instructions described above.

The CPU 101 or the processor 103 may be used as the device as described in various embodiments below, and may be connected to an internal network (e.g. a local area network (LAN) or a wide area network (WAN) within an organization) and/or an external network (e.g. the Internet) through the network interface 107.

The input 109 may include a keyboard, a mouse, etc. The output 111 may include a display for display the images processed in the embodiments below.

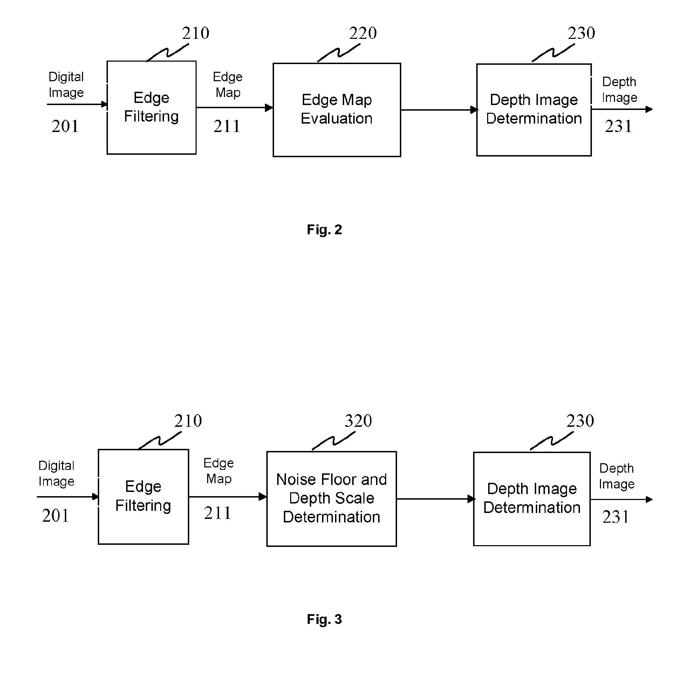

FIG. 2 shows a flow diagram according to various embodiments.

Given a digital image 201 including a plurality of picture elements, the digital image 201 is edge filtered at 210 to determine an edge map 211, wherein the edge map 211 includes a plurality of edge values and each edge value is associated with at least one picture element of the digital image 201. There is a statistically monotonic relationship between the sharpness level of the image regions and the associated depths. Usually sharper regions are closer to an observer, whereas smoother regions are farther to the observer. Accordingly, the edge map may be used as a sharpness cue in the determination of depth image.

The digital image 201 may be received via a network interface, or may be stored on a data storage. In an embodiment, the digital image may be downscaled for one or more times. The edge filtering and the subsequent processing on the digital image 201 may be similarly carried out on the downscaled image accordingly. In the embodiment wherein the digital image is downscaled, each edge value of the edge map may be associated with more than one pixels of the digital image 201.

In an embodiment, the edge filtering 210 may include maximum-minimum filtering, based on the difference between a maximum value and a minimum value within a predefined image region. For example, for each picture element of the digital image 201, a maximum picture element value associated with a picture element in a predefined neighboring region of the respective picture element and a minimum picture element value associated with a picture element in a predefined neighboring region of the respective picture element may be determined, and a difference value between the maximum picture element value and the minimum picture element value may be determined. The edge value associated with the picture element may be determined based on the difference value. In other embodiments, the edge filtering may use other filtering suitable for detecting the edges, such as maximum filtering and average filtering, for example. In some embodiments, the edge filtering may include a Canny edge detector, a Sobel operator, or any other suitable edge detection algorithms.

In an embodiment, the digital image may be divided into a plurality of blocks, wherein each block includes a plurality of pixel elements. Each determined edge value may be associated with a block of pixel elements.

In one embodiment wherein the digital image 201 is a grayscale image, the picture element value described in the edge filtering may refer to the intensity value of the picture element in the grayscale image. In another embodiment wherein the digital image 201 is a color image, the picture element value described in the edge filtering may refer to a weighted average value of the color component values of the picture element.

After the edge map 211 is determined at 210, the edge map 211 may be further processed and evaluated at 220. For each edge map region of a plurality of edge map regions in the edge map 211, an edge map region metric may be determined. For each edge map region, a determination may be made as to whether the respective edge region metric fulfills a predefined criterion. The number of edge map regions for which the respective edge map region metric fulfills the predefined criterion may be determined as a first value, and the number of edge map regions for which the respective edge map region metric does not fulfill the predefined criterion may be determined as a second value.

According to an embodiment, the edge map region metric for each edge map region may include the number of high edge values and the number of low edge values in the respective edge map region. In this embodiment, the high edge values may represent the edge values higher than a predetermined high threshold, and the low edge values may represent the edge values lower than a predetermined low threshold.

In an embodiment, the predefined criterion may be whether the edge map region metric exceeds a first predefined edge threshold value. In an illustrative embodiment, determining whether the edge map region metric fulfills the predefined criterion may include determining whether the number of high edge values exceeds the first predefined edge threshold value. If the number of high edge values exceeds the first predefined edge threshold value, the associated edge map region may be referred to as a high frequency region, indicating that the edge map region includes sufficient number of high edge values.

In a further embodiment, the edge map region metric not fulfilling the predefined criterion may be whether the edge map region metric exceeds a second predefined edge threshold value. The second predefined edge threshold value may be different from the first predefined edge threshold value. In an illustrative embodiment, whether the edge map region metric exceeds the second predefined edge threshold value may include whether the number of low edge values in the edge map region metric exceeds the second predefined edge threshold value. If the number of low edge values exceeds the first predefined edge threshold value, the associated edge map region may be referred to as a low frequency region, indicating that the edge map region includes sufficient number of low edge values.

According to a further embodiment, in the edge map evaluation 220, it may be determined as to whether the digital image is a high frequency image or a low frequency image based on the first value and the second value. In case the digital image is neither a high frequency image nor a low frequency image, a respective depth scaled value may be determined for each depth value associated with a picture element by reducing the depth value by a first depth scale. In case the digital image is either a high frequency image or a low frequency image, a respective depth scaled value may be determined for each depth value associated with a picture element by reducing the depth value by a second depth scale. The first depth scale may be smaller than the second depth scale.

In an embodiment, the digital image may be determined to be a high frequency image in case the first value exceeds a first frequency threshold value. In an embodiment, the first value may represent the number of edge map regions in which the respective number of high edge values exceeds the first predefined edge threshold value, i.e. the number of high frequency regions.

In another embodiment, the digital image may be determined to be a low frequency image in case the second value exceeds a second frequency threshold value. The second frequency threshold value may be different from the first frequency threshold value. The second value may represent the number of edge map regions in which the respective number of low edge values exceeds the second predefined edge threshold value, i.e. the number of low frequency regions.

Based on the first value and the second value determined at edge map evaluation 220, the depth image 231 may be determined at 230. In one embodiment, the depth image may be determined based on the edge map 211, the first value and the second value via a piece-wise linear mapping function. In another embodiment, the depth image may be determined based on the edge map 211, the first value and the second value via a S-curve mapping function. Other suitable mapping functions may also be used in other embodiments.

Fig. 3 shows a flow diagram according to another embodiment.

Similar to the flow diagram of Fig. 2, a digital image 201 is edge filtered at 210 to determine an edge map 211, wherein the edge map 211 includes a plurality of edge values and each edge value is associated with at least one picture element of the digital image 201.

After the edge map 211 is determined at 210, noise floor and depth scale determination may be made at 220, e.g. to determine the noise floor adaptation values and depth scale for the depth image determination. For each edge map region of a plurality of edge map regions in the edge map 211, an edge map region metric may be determined. For each edge map region, a determination may be made as to whether the respective edge region metric fulfills a predefined criterion. The number of edge map regions for which the respective edge map region metric fulfills the predefined criterion may be determined as a first value, and the number of edge map regions for which the respective edge map region metric does not fulfill the predefined criterion may be determined as a second value.

According to an embodiment, a first noise floor adaptation value or a second noise floor adaptation value may be determined for each picture element at 320, depending on whether the picture element is located in an edge map region for which the respective edge map region metric fulfills the predefined criterion. The second noise floor adaptation value may be smaller than the first noise floor adaptation value.

According to a further embodiment, it may be further determined at 320 as to whether the digital image 201 is a high frequency image or a low frequency image based on the first value and the second value. Depending on whether the digital image 201 is a high frequency image or a low frequency image, a first depth scale or a second depth scale may be determined for each picture element. The first depth scale may be smaller than the second depth scale.

Based on the first noise floor adaptation value, the second noise floor adaptation value, the first depth scale and the second depth scale determined at 320, edge noise may be subtracted and the depth value may be scaled in the depth image determination 230 to determine the depth image 231.

For example, in case a picture element is located in an edge map region for which the respective edge map region metric fulfills the predefined criterion, the depth value associated with the picture element may be reduced by the first noise floor adaptation value to determine a noise floor adapted depth value. In case the picture element is located in an edge map region for which the respective edge map region metric does not fulfill the predefined criterion, the depth value associated with the picture element may be reduced by the second noise floor adaptation value to determine a noise floor adapted depth value. The second noise floor adaptation value may be smaller than the first noise floor adaptation value. The depth image 231 may include the respectively determined noise floor adapted depth values.

In another example, in case the digital image is neither a high frequency image nor a low frequency image, a respective depth scaled value may be determined for each depth value associated with a picture element by reducing the depth value by the first depth scale. In case the digital image is either a high frequency image or a low frequency image, a respective depth scaled value may be determined for each depth value associated with a picture element by reducing the depth value by the second depth scale. The first depth scale may be smaller than the second depth scale.

A detailed description of the various embodiments of noise floor and depth scale adaptation is provided below.

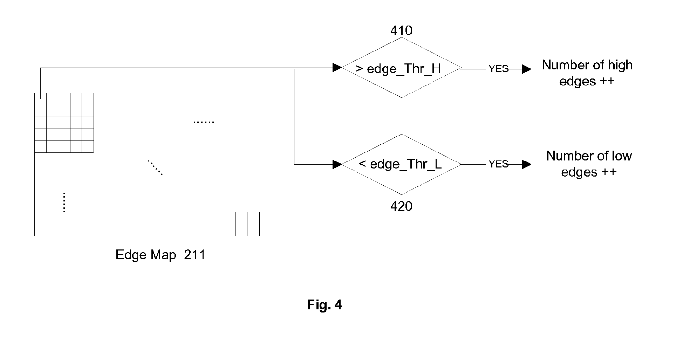

Fig. 4 shows a flow diagram illustrating the determination of different edge numbers according to an embodiment.

As shown in Fig. 4, the edge map 211 as determined at 210 includes a plurality of edge values associated with a plurality of pixels or blocks of pixels. For each edge value or for each block of edge values, it is determined at 410 as to whether the edge value is higher than a predetermined high threshold "edge_Thr_H". In an example, the high threshold "edge_Thr_H" may have a value of 96. If the edge value is higher than the high threshold, the edge value is a high edge value, and the number of high edges is increased by 1.

For each edge value or for each block of edge values, it is determined at 420 as to whether the edge value is smaller than a predetermined low threshold "edge_Thr_L". In an example, the low threshold "edge_Thr_L" may have a value of 6. If the edge value is lower than the low threshold, the edge value is a low edge value, and the number of low edges is increased by 1.

The above determination may be made for all edge values of the edge map in a raster scan order, or any other suitable scan order, such that the total number of high edges and the total number of low edges in the edge map 211 may be determined, which represent a global classification of the edge values. The total number of high edges and the total number of low edges may be used to determine whether the digital image 210 from which the edge map 211 is determined is a high frequency image (i.e. an image in which the number of high edges is sufficiently high) or a low frequency image (i.e. in image in which the number of low edges is sufficiently high).

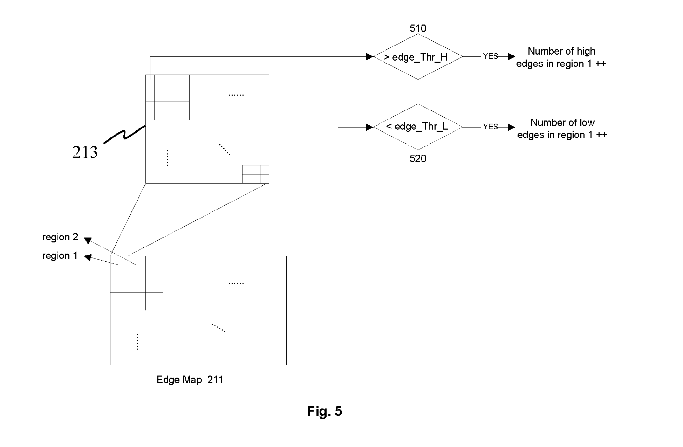

Fig. 5 shows a flow diagram illustrating the determination of different edge regions according to an embodiment.

Different from Fig. 4 wherein the number of high edges and low edges are determined for the edge map 211, the number of high edges and low edges are determined for each edge map region of the edge map 211 in Fig. 5.

The edge map 211 may be divided into NxM (e.g. 9x16) edge map regions, e.g. "region 1", "region 2", ...as shown in Fig. 5, wherein each edge map region may include a plurality of edge values associated with a plurality of picture elements.

For each edge map region, e.g. "region 1" 213, it is determined at 510 as to whether each edge value in the "region 1" 213 is higher than the predetermined high threshold "edge_Thr_H". If the edge value is higher than the high threshold, the edge value is a high edge value, and the number of high edges in "region 1" 213 is increased by 1.

For each edge map region, e.g. "region 1" 213, it is determined at 520 as to whether each edge value in the "region 1" 213 is smaller than the predetermined low threshold "edge_Thr_L". If the edge value is lower than the low threshold, the edge value is a low edge value, and the number of low edges is increased by 1.

After the above determination is made for all edge values of the "region 1" 213, the same determination may be made for other edge map regions of the edge map 211. Accordingly, the number of high edges and the number of low edges in each edge map region may be determined according to Fig. 5, which represents a local classification of the edge values. The number of high edge values and the number of low edge values in the respective edge map region may be determined as the edge map region metric for the respective edge map region.

Depending on the number of high edges and the number of low edges determined for each edge map region and for the entire edge map, the edge map regions and the associated digital image may be classified into various types, which may be taken into account when determining the noise floor and depth scale.

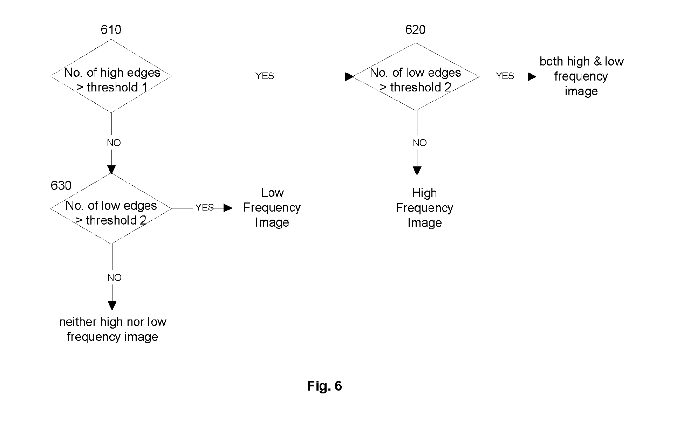

Fig. 6 shows a flow diagram illustrating the classification of the digital image 210 according to an embodiment.

As shown in Fig. 6, the number of high edges and the number of low edges determined for the edge map 211 in Fig. 4 may be compared with a first frequency threshold value and a second frequency threshold value, respectively.

At 610, it is determined whether the number of high edges in the edge map 211 exceeds the first frequency threshold value. In case the number of high edges exceeds the first frequency threshold value, it is determined at 620 whether the number of low edges in the edge map 211 exceeds the second frequency threshold value. The second frequency threshold value may be different from the first frequency threshold value. In case the number of low edges in the edge map 211 does not exceed the second frequency threshold value, the digital image 201 associated with the edge map 211 is classified as a high frequency image having a high frequency characteristic. In case the number of low edges in the edge map 211 exceeds the second frequency threshold value at 620, the digital image 201 associated with the edge map 211 is classified as both high and low frequency image having both high frequency and low frequency characteristics.

In case the number of high edges does not exceed the first frequency threshold value at 610, it is determined at 630 whether the number of low edges in the edge map 211 exceeds the second frequency threshold value. In case the number of low edges in the edge map 211 exceeds the second frequency threshold value, the digital image 201 associated with the edge map 211 is classified as a low frequency image having a low frequency characteristic. In case the number of low edges in the edge map 211 does not exceed the second frequency threshold value at 630, the digital image 201 associated with the edge map 211 is classified as neither high nor low frequency image having neither high frequency nor low frequency characteristics.

The determination of low frequency characteristic for the digital image may be independent from the determination of high frequency characteristic.

Similar to Fig. 6, each edge map region of the edge map 211 may be classified as to the high frequency or low frequency characteristics.

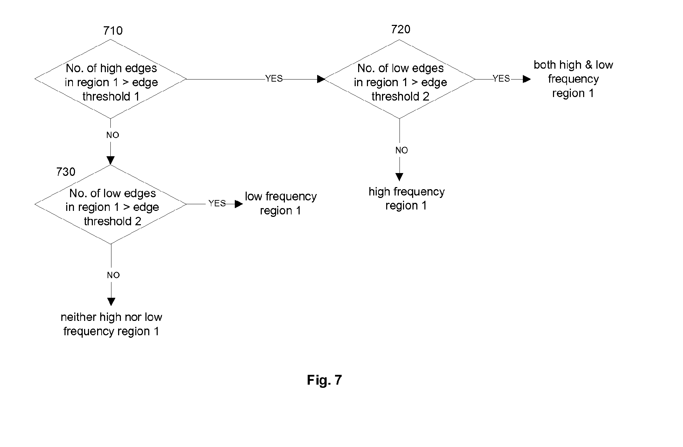

Fig. 7 shows a flow diagram illustrating the classification of the edge map regions according to an embodiment.

As shown in Fig. 7, the number of high edges and the number of low edges determined for each edge map regions of the edge map 211 in Fig. 5 may be compared with a first edge threshold value and a second edge threshold value, respectively.

At 710, it is determined whether the number of high edges in the edge map region 1 exceeds the first edge threshold value. In case the number of high edges exceeds the first edge threshold value, it is determined at 720 whether the number of low edges in the edge map region 1 exceeds the second edge threshold value. The second edge threshold value may be different from the first edge threshold value. In case the number of low edges the edge map region 1 does not exceed the second edge threshold value, the edge map region 1 may classified as a high frequency region having a high frequency characteristic. In case the number of low edges in the edge map region 1 exceeds the second edge threshold value at 720, the edge map region 1 is classified as both high and low frequency region having both high frequency and low frequency characteristics.

In case the number of high edges does not exceed the first edge threshold value at 710, it is determined at 730 whether the number of low edges in the edge map region 1 exceeds the second edge threshold value. In case the number of low edges in the edge map region 1 exceeds the second edge threshold value, the edge map region 1 is classified as a low frequency region having a low frequency characteristic. In case the number of low edges in the edge map region 1 does not exceed the second edge threshold value at 730, the edge map region 1 is classified as neither high nor low frequency region having neither high frequency nor low frequency characteristics.

The above determination may be made for each edge map regions of the edge map, such that each edge map regions is classified with regard to its high frequency or low frequency characteristics.

The determination of low frequency characteristic for the edge map regions may be independent from the determination of high frequency characteristic.

In the embodiments of Fig. 6, the determination as to whether the digital image is a high or low frequency image is based on the total number of high edges and the total number of low edges in the edge map as determined in Fig. 4.

In another embodiment, the determination as to whether the digital image is a high or low frequency image may be based on the number of high frequency regions and the number of low frequency regions in the edge map. For example, based on the classification of the edge map regions in the embodiment of Fig. 7, the number of edge map regions classified as high frequency regions may be counted as a first value, and the number of edge map regions classified as low frequency regions may be countered as a second value. The first value may be compared with the first frequency threshold value, and the second value may be compared with the second frequency threshold value, to determine whether the digital image is a high frequency image or a low frequency image.

Depending on the classification of the digital image and the edge map regions as in the embodiments of Figs. 6 and 7 above, the noise floor and depth scale used in the determination of the depth image may be determined.

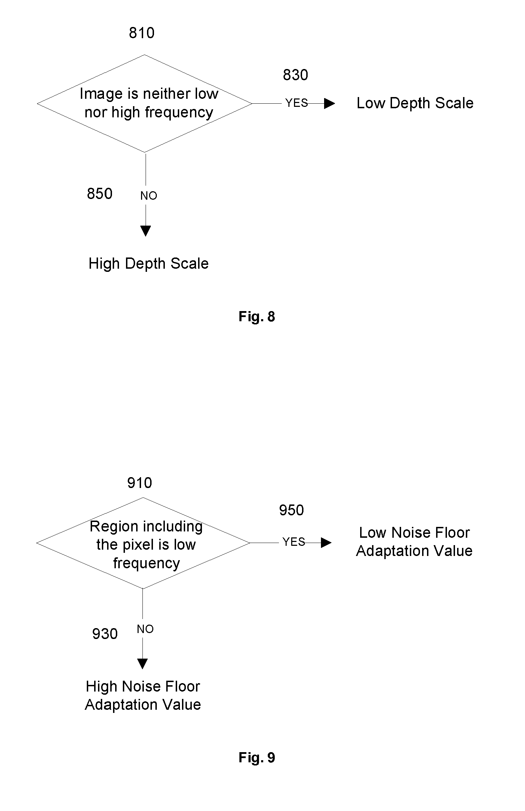

Fig. 8 shows a flow diagram illustrating the determination of depth scale according to an embodiment.

At 810, it is determined whether the digital image is neither a high frequency image nor a low frequency image. In case the digital image is neither a high frequency image nor a low frequency image at 830, a first depth scale may be determined. In case the digital image is either a high frequency image or a low frequency image, or a both high and low frequency image at 850, a second depth scale may be determined. The first depth scale is lower than the second depth scale.

If the digital image is neither a high frequency image nor a low frequency image, the digital image may have intermediate frequency characteristics and may be blurry. A lower depth scale may be provided to scale up depth values compared with a digital image which is either a high frequency image or a low frequency image.

Fig. 9 shows a flow diagram illustrating the determination of noise floor adaptation values according to an embodiment.

At 910, it is determined whether an edge map region the current pixel is in is a low frequency region. In case the current pixel is not located in a low frequency region at 930, a first noise floor adaptation value is determined. In case the current pixel is located in a low frequency region 950, a second noise floor adaptation value may be determined. The first noise floor adaptation value may be higher than the second noise floor adaptation value. Since the effect of the noise on the edge map to the depth image is more harmful in high frequency contents, a higher noise floor adaption value is used in high frequency edge map regions compared with low frequency edge map regions.

In the embodiment of Fig. 9, in case the region including the current pixel is not a low frequency region, the region may be a high frequency region, or a neither high nor low frequency region as determined in Fig. 7, for which a higher noise floor adaptation value is used. In case the region including the current pixel is a low frequency region, the region may also be a both high and low frequency region as determined in Fig. 7, for which a lower noise floor adaptation value is used.

In another embodiment, a higher noise adaptation value may be used for a high frequency region and a both high and low frequency region. A lower noise adaptation value may be used for a low frequency region. An intermediate noise adaptation value inbetween may be used for a neither high nor low frequency region.

The noise adaptation values and the depth scales as determined in accordance with the embodiments above may be used to adjust the depth values so as to determine a depth image.

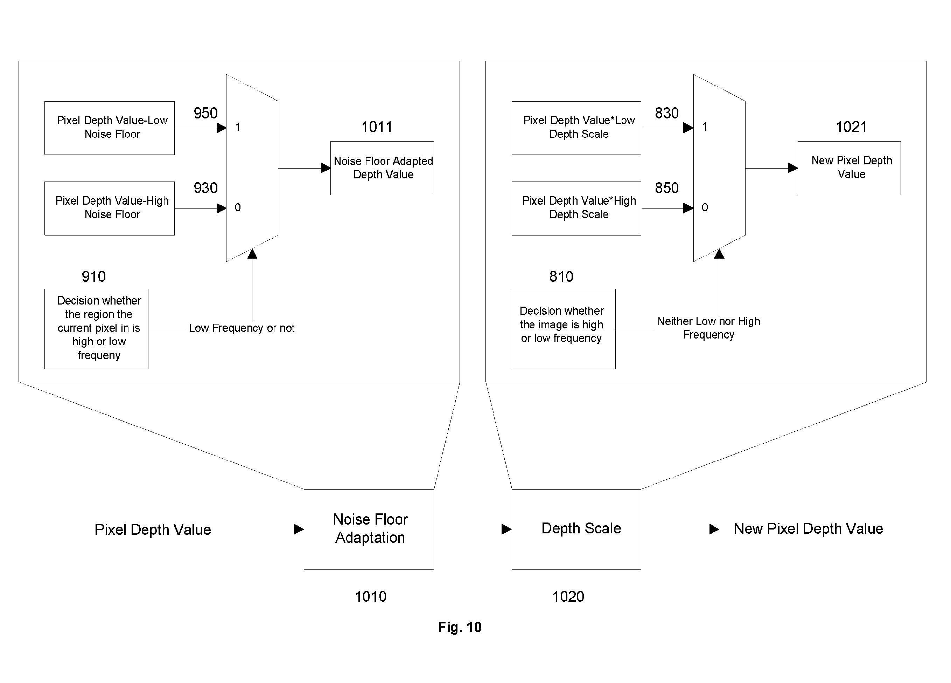

Fig. 10 shows a flow diagram illustrating the noise floor and depth scale adaptation according to an embodiment.

For a depth value associated with a pixel, a noise floor adaptation 1010 is performed to determine noise floor adapted depth values 1011, and a depth scaling 1020 is performed to determine the depth scaled values 1021. The depth scaled values 1021 may form the depth values in the determined depth image.

In the noise floor adaptation 1010, the similar operations of Fig. 9 are performed. For example, at 910, it is determined whether the edge map region the current pixel is in is a low frequency region. In case the current pixel is not located in a low frequency region at 930, the depth value associated with the current pixel is reduced by a first noise floor adaptation value to determine the noise floor adapted depth value 1011. In case the current pixel is located in a low frequency region 950, the depth value associated with the current pixel is reduced by a second noise floor adaptation value to determine the noise floor adapted depth value 1011. The first noise floor adaptation value may be higher than the second noise floor adaptation value.

In the depth scaling 1020, the similar operations of Fig. 8 are performed. For example, at 810 it is determined whether the digital image is neither a high frequency image nor a low frequency image. In case the digital image is neither a high frequency image nor a low frequency image at 830, the depth value associated with the current pixel is reduced by a first depth scale to determine a new depth scaled value 1021. In case the digital image is either a high frequency image or a low frequency image, or a both high and low frequency image at 850, the depth value associated with the current pixel is reduced by a second depth scale to determine a new depth scaled value 1021. The first depth scale is lower than the second depth scale.

The finally determined depth image may include depth values adapted by noise floor adaptation values and scaled by the depth scales, which may be determined by a mapping from the edge map.

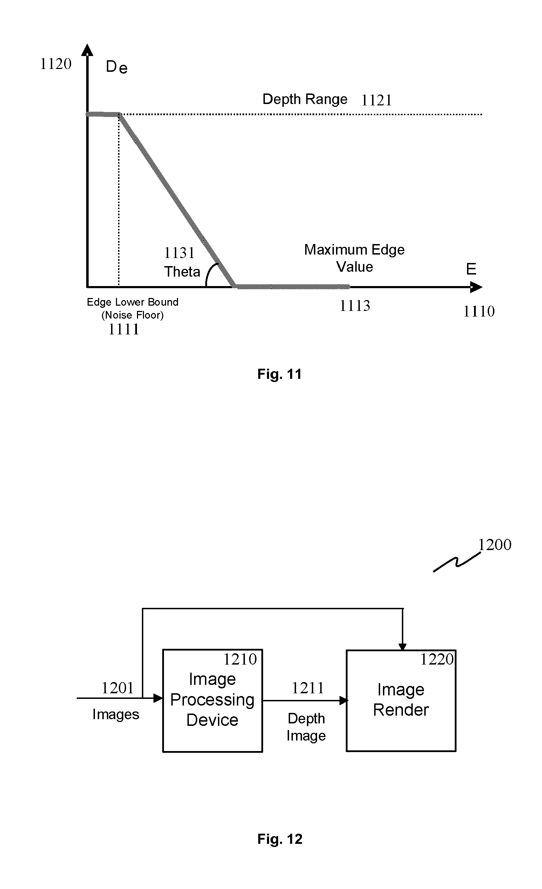

In an embodiment as shown in Fig. 11, the depth values of the depth image may be determined using the edge values of the edge map via a piece-wise linear mapping function.

The x-axis and y-axis represent edge values and depth values, respectively. The edge lower bound value 1111 represents the noise floor value, which may be determined in accordance with the above embodiments. Edge values below the edge lower bound value 1111 may be assigned with the highest depth value, as shown in Fig. 11. The depth range 1121 defines how much depth variation may be obtained based on the edge value variations. The tangent of the mapping function, Theta 1131, represents the depth scale as determined in accordance with the above embodiments. A low depth scale value may push regions of the image more to the background, whereas a high depth scale value may push regions of the image more to the foreground. A range of edge values below the maximum edge value 1113 may be mapped to the same depth value, e.g. the lowest depth value representing the foreground object.

In another embodiment, the depth image may be determined by mapping the edge map using other suitable mapping functions. For example, when a look-up table is provided, a S-curve mapping function may be used, wherein the noise floor may also be used to set the starting point of the S-curve and the depth scale factor may be used for blending coefficient

The embodiments above provide a method and a device for determining a depth image indicating the relative depth of the objects in the digital image, i.e., which objects are in the front and which objects are at the back, using a 2D digital image (i.e. a single viewpoint image). Based on the determined depth image, 2D images or videos may be converted to 3D images or videos. The method and the device of the various embodiments provide a depth image with more accuracy, by adjusting noise elimination level and depth scale level based on the high or low frequency characteristics of the image and its edge map regions.

FIG. 12 shows an imaging system according to an embodiment.

The imaging system 1200 receives an image 1201, which may be a digital image 201 as described above.

The imaging system 1200 includes an image processing device 1210 for determining a depth image for each image 1201 in accordance with the various embodiments above. The determined depth image 1211 is transmitted to an image render 1220.

The image render 1220 may receive the image 1201 and the depth map 1211 and render the image 1201 for 3D display.

The imaging system 1200 may be embodied in a 3D TV or a computer, for example.

The method and the device for determining the depth image in the above embodiments provide accurate depth values, by subtracting out edge noise effects and scaling edge values based on the high or low frequency characteristics of the image and its edge map regions. In addition, the method and the device are based on the 2D images or videos, which enables displaying of 2D content in a 3D display and may also be used in any other areas in which the depth information or the information about the location of the objects in a scene is required.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims and all changes which come within the meaning and range of equivalency of the claims are therefore intended to be embraced.

## Claims

1. A method for determining a depth image (231) for a digital image (201) comprising a plurality of picture elements, the method comprising:
• edge filtering (210) the digital image to determine an edge map, the edge map (211) comprising a plurality of edge values, wherein each edge value is associated with at least one picture element;
• determining (220) for each edge map region of a plurality of edge map regions an edge map region metric, wherein the edge map region metric for each edge map region includes the number of high edge values and the number of low edge values in the respective edge map region;
• determining for each edge map region as to whether the respective edge map region metric fulfills a predefined criterion, wherein the predefined criterion is fulfilled when the number of high edge values exceeds a first predefined edge threshold value and the predefined criterion is not fulfilled when the number of low edge values exceeds a second predefined edge threshold value;
• determining the number of edge map regions for which the respective edge map region metric fulfills the predefined criterion as a first value;
• determining the number of edge map regions for which the respective edge map region metric does not fulfill the predefined criterion as a second value; and
• determining (230) the depth image using the first value and the second value,
wherein the depth values of the depth image are determined using the edge values of the edge map via a piecewise linear mapping function.

2. The method of claim 1 wherein the determining the depth image comprises:
• determining for each picture element associated with a depth value as to whether the picture element is located in an edge map region for which the respective edge map region metric fulfills the predefined criterion;
• in case the picture element is located in an edge map region for which the respective edge map region metric fulfills the predefined criterion, reducing the associated depth value by a first noise floor adaptation value to determine a noise floor adapted depth value;
• in case the picture element is located in an edge map region for which the respective edge map region metric does not fulfill the predefined criterion, reducing the associated depth value by a second noise floor adaptation value to determine a noise floor adapted depth value, wherein the second noise floor adaptation value is smaller than the first noise floor adaptation value;
• wherein the depth image comprises the respectively determined noise floor adapted depth values.

3. The method of any one of claims 1 or 2 wherein the determining the depth image comprises:
• determining as to whether the digital image is a high frequency image or a low frequency image based on the first value and the second value;
• in case the digital image is neither a high frequency image nor a low frequency image, determining for each depth value associated with a picture element a respective depth scaled value by reducing the depth value by a first depth scale; and
• in case the digital image is either a high frequency image or a low frequency image, determining for each depth value associated with a picture element a respective depth scaled value by reducing the depth value by a second depth scale, wherein the first depth scale is smaller than the second depth scale.

4. The method of claim 1, wherein the first predefined edge threshold value is different from the second predefined edge threshold value.

5. The method of any one of claims 1 to 4, wherein determining as to whether the digital image is a high frequency image or a low frequency image comprises:
• determining that the digital image is a high frequency image in case the first value exceeds a first frequency threshold value;
• determining that the digital image is a low frequency image in case the second value exceeds a second frequency threshold value, the second frequency threshold value being different from the first frequency threshold value.

6. A device (100,1210) for determining a depth image (231) for a digital image (201) comprising a plurality of picture elements, the device comprising:
an edge filter configured to filter (210) the digital image to determine an edge map, the edge map (211) comprising a plurality of edge values, wherein each edge value is associated with at least one picture element;
a processor (103) configured to
• determine (220) for each edge map region of a plurality of edge map regions an edge map region metric, wherein the edge map region metric for each edge map region includes the number of high edge values and the number of low edge values in the respective edge map region;
• determine for each edge map region as to whether the respective edge map region metric fulfills a predefined criterion, wherein the predefined criterion is fulfilled when the number of high edge values exceeds a first predefined edge threshold value and the predefined criterion is not fulfilled when the number of low edge values exceeds a second predefined edge threshold value;
• determine the number of edge map regions for which the respective edge map region metric fulfills the predefined criterion as a first value;
• determine the number of edge map regions for which the respective edge map region metric does not fulfill the predefined criterion as a second value;
• determine the depth image (230) using the first value and the second value,
wherein the depth values of the depth image are determined using the edge values of the edge map via a piecewise linear mapping function.

7. The device of claim 6, wherein the processor is configured to determine the depth image such that it comprises:
• determining for each picture element associated with a depth value as to whether the picture element is located in an edge map region for which the respective edge map region metric fulfills the predefined criterion;
• in case the picture element is located in an edge map region for which the respective edge map region metric fulfills the predefined criterion, reducing the associated depth value by a first noise floor adaptation value to determine a noise floor adapted depth value;
• in case the picture element is located in an edge map region for which the respective edge map region metric does not fulfill the predefined criterion, reducing the associated depth value by a second noise floor adaptation value to determine a noise floor adapted depth value, wherein the second noise floor adaptation value is smaller than the first noise floor adaptation value;
• wherein the depth image comprises the respectively determined noise floor adapted depth values.

8. The device of any one of claims 6 or 7, wherein the processor is configured to determine the depth image such that it comprises:
• determining as to whether the digital image is a high frequency image or a low frequency image based on the first value and the second value;
• in case the digital image is neither a high frequency image nor a low frequency image, determining for each depth value associated with a picture element a respective depth scaled value by reducing the depth value by a first depth scale; and
• in case the digital image is either a high frequency image or a low frequency image, determining for each depth value associated with a picture element a respective depth scaled value by reducing the depth value by a second depth scale, wherein the first depth scale is smaller than the second depth scale;

9. The device of claims 6, wherein the first predefined edge threshold value is different from the second predefined edge threshold value.

10. The device of any one of claims 6 to 9, wherein the processor is configured to determine as to whether the digital image is a high frequency image or a low frequency image such that it comprises:
• determining that the digital image is a high frequency image in case the first value exceeds a first frequency threshold value;
• determining that the digital image is a low frequency image in case the second value exceeds a second frequency threshold value, the second frequency threshold value being different from the first frequency threshold value.

## Patentansprüche

1. **Verfahren zum Bestimmen** einer Bildtiefe (231) für ein digitales Bild (201), welches eine Vielzahl von Bildelementen enthält, das Verfahren mit
• Kantenfiltern (201) des digitalen Bilds, um ein Kantenbild oder eine Kantenkarte (edge map) zu bestimmen, wobei die Kantenkarte (211) eine Vielzahl von Kantenwerten aufweist und jeder Kartenwert zumindest einem Bildelement zugeordnet ist;
• Bestimmen (220) einer metrischen Kantenkarten-Region für jede Kantenkarte-Region einer Vielzahl von Kantenkarten-Regionen, wobei die metrische Kantenkarten-Region (edge map region metric) für jede Kantenkarten-Region die Anzahl von hohen Kantenwerten und die Anzahl von niedrigen Kantenwerten in der jeweiligen Kantenkarten-Region beinhaltet;
• Bestimmen - für jede Kantenkarten-Region - ,ob die jeweilige metrische Kantenkarten-Region ein vorbestimmtes Kriterium erfüllt, wobei das vorbestimmte Kriterium erfüllt ist, wenn die Anzahl der hohen Kantenwerte einen ersten vorgegebenen Schwellenwert überschreitet, und das vorbestimmte Kriterium nicht erfüllt ist, wenn die Anzahl von niedrigen Kantenwerten einen zweiten vorgegebenen Schwellenwert überschreitet;
• Bestimmen der Anzahl von Kantenkarten-Regionen für welche die jeweilige metrische Kantenkarten-Region das vorbestimmte Kriterium als einen ersten Wert erfüllt;
• Bestimmen der Anzahl von Kantenkarten-Regionen für welche die jeweilige metrische Kantenkarten-Region das vorbestimmte Kriterium als einen zweiten Wert nicht erfüllt; und
• Bestimmen (230) der Bildtiefe unter Verwendung des ersten Wertes und des zweiten Wertes, wobei die Tiefenwerte des Tiefenbilds (depth image) bestimmt werden, unter Verwendung der Kantenwerte der Kantenkarte über eine stückweise lineare Mapping-Funktion.

2. Verfahren nach Anspruch 1, wobei das Bestimmen der Bildtiefe umfasst
• Bestimmen - für jedes Bildelement, welches einem Tiefenwert zugeordnet ist - ,ob das Bildelement in einer Kantenkarten-Region liegt, für welche die jeweilige metrische Kantenkarten-Region das vorgegebene Kriterium erfüllt;
• falls das Bildelement in einer Kantenkarten-Region liegt, für die die jeweilige metrische Kantenkarten-Region das vorbestimmte Kriterium erfüllt, Reduzieren des zugeordneten Tiefenwerts, um eine erste Grundrausch-Anpassung dem Wert nach, zur Bestimmung eines im Grundrauschen angepassten Tiefenwertes;
• wenn das Bildelement in einer Kantenkarten-Region liegt, für welche die jeweilige metrische Kantenkarten-Region das vorbestimmte oder vorgegebene Kriterium nicht erfüllt, wird der zugeordnete Tiefenwert um einen zweiten Grundrausch-Anpassungswert reduziert, um einen im Grundrauschen angepassten Tiefenwert zu erhalten oder zu bestimmen, wobei der zweite Grundrausch-Anpassungswert kleiner ist als der erste Grundrausch-Anpassungswert;
• wobei das Tiefenbild die jeweils bestimmten, im Grundrauschen angepassten Tiefenwerte aufweist oder beinhaltet.

3. Verfahren nach einem der Ansprüche 1 oder 2, wobei das Bestimmen des Tiefenbilds umfasst
• Bestimmen, ob das digitale Bild ein Hochfrequenz-Bild ist, oder ein NiederfrequenzBild, gestützt auf den ersten Wert und den zweiten Wert;
• falls das digitale Bild weder ein Hochfrequenz-Bild noch ein Niederfrequenz-Bild ist, Bestimmen - für jeden Tiefenwert, der einem Bildelement zugeordnet ist - eines jeweils tiefenskalierten Werts durch Reduzieren des Tiefenwerts um eine erste Tiefenskala (depth scale); und
• falls das digitale Bild entweder ein Hochfrequenz-Bild oder ein Niederfrequenz-Bild ist, Bestimmen - für jeden Tiefenwert, der einem Bildelement zugeordnet ist - eines jeweiligen tiefenskalierten Werts (depth scaled value) durch Reduzieren des Tiefenwerts mit oder um eine zweite Tiefenskala oder einen zweiten Tiefenwert (depth scale), wobei die erste Tiefenskala kleiner ist als die zweite Tiefenskala.

4. Verfahren nach Anspruch 1, wobei der erste vorbestimmte Schwellenwert sich von dem zweiten vorbestimmten Schwellenwert unterscheidet.

5. Verfahren nach einem der Ansprüche 1 bis 4, wobei das Bestimmen, ob das Bild ein Hochfrequenz-Bild oder ein Niederfrequenz-Bild ist, umfasst
• Bestimmen, dass das digitale Bild ein Hochfrequenz-Bild ist, wenn der erste Wert einen ersten Frequenz-Schwellenwert überschreitet;
• Bestimmen, dass das digitale Bild ein Niederfrequenz-Bild ist, wenn der zweite Wert einen zweiten Frequenz-Schwellenwert überschreitet, wobei der zweite Frequenz-Schwellenwert sich von dem ersten Frequenz-Schwellenwert unterscheidet.

6. **Anordnung** (100, 1210) zum Bestimmen eines Tiefenbildes (231) für ein Digitalbild (201), welches eine Vielzahl von Bildelementen umfasst, wobei die Einrichtung aufweist:
einen Kantenfilter, ausgebildet zum Filtern (210) des Digitalbildes zur Bestimmung einer Kantenkarte, wobei die Kantenkarte (211) eine Vielzahl von Kantenwerten umfasst, wobei jeder Kantenwert zumindest einem Bildelement zugeordnet ist; einen Prozessor (103), ausgebildet zum
• Bestimmen (220) - für jede Kantenkarten-Region einer Mehrzahl oder Vielzahl von Kantenkarten-Regionen - einer metrischen Kantenkarten-Region, wobei die metrische Kantenkarten-Region für jede Kantenkarten-Region die Zahl der hohen Kantenwerte und die Zahl der niedrigen Kantenwerte in der jeweiligen Kantenkarten-Region aufweist oder beinhaltet;
• Bestimmen - für jede Kantenkarten-Region -,ob die jeweilige metrische Kantenkarten-Region ein vorbestimmtes Kriterium erfüllt, wobei das vorbestimmte Kriterium erfüllt ist, wenn die Anzahl der hohen Kantenwerte einen ersten vorgegebenen Schwellenwert überschreitet und das vorgegebene zweite Kriterium nicht erfüllt ist, wenn die Anzahl der niedrigen Kantenwerte einen zweiten vorbestimmten Schwellenwert überschreitet;
• Bestimmen der Anzahl von Kantenkarten-Regionen für die die jeweilige metrische Kantenkarten-Region das vorbestimmte Kriterium als einen ersten Wert erfüllt;
• Bestimmen der Zahl der Kantenkarten-Regionen für die die jeweilige metrische Kantenkarten-Region das vorgegebene Kriterium als einen zweiten Wert nicht erfüllt;
• Bestimmen der Bildtiefe (230) unter Verwendung des ersten Wertes und des zweiten Wertes, wobei die Tiefenwerte des Tiefenbildes unter Verwendung der Kantenwerte der Kantenkarte über eine stückweise lineare Mapping-Funktion bestimmt werden oder bestimmbar sind.

7. Einrichtung nach Anspruch 6, wobei der Prozessor ausgebildet (konfiguriert) ist, das Tiefenbild so zu bestimmen, dass sie (NB. die Ausbildung) beinhaltet
• Bestimmen - für jedes Bildelement, welches einem Tiefenwert zugeordnet ist - ,ob das Bildelement in einer Kantenkarten-Region liegt, für welche die jeweilige metrische Kantenkarten-Region das vorgegebene Kriterium erfüllt;
• falls das Bildelement in einer Kantenkarten-Region liegt, für die die jeweilige metrische Kantenkarten-Region das vorbestimmte Kriterium erfüllt, Reduzieren des zugeordneten Tiefenbilds, um eine erste Grundrausch-Anpassung dem Wert nach, zur Bestimmung eines im Grundrauschen angepassten Tiefenwerts;
• wenn das Bildelement in einer Kantenkarten-Region liegt, für welche die jeweilige metrische Kantenkarten-Region das vorbestimmte oder vorgegebene Kriterium nicht erfüllt, wird der zugeordnete Tiefenwert um einen zweiten GrundrauschAnpassungswert reduziert, um einen im Grundrauschen angepassten Tiefenwert zu erhalten oder zu bestimmen, wobei der zweite Grundrausch-Anpassungswert kleiner ist als der erste Grundrausch-Anpassungswert;
• wobei das Tiefenbild die jeweils bestimmten, im Grundrauschen angepassten Tiefenwerte aufweist oder beinhaltet.

8. Einrichtung nach einem der Ansprüche 6 oder 7, wobei der Prozessor ausgebildet (konfiguriert) ist, das Tiefenbild so zu bestimmen, dass sie (die Ausbildung oder Konfiguration) umfasst
• Bestimmen, ob das digitale Bild ein Hochfrequenz-Bild ist, oder ein NiederfrequenzBild, gestützt auf den ersten Wert und den zweiten Wert;
• falls das digitale Bild weder ein Hochfrequenz-Bild noch ein Niederfrequenz-Bild ist, Bestimmen - für jeden Tiefenwert, der einem Bildelement zugeordnet ist - eines jeweils tiefenskalierten Werts durch Reduzieren des Tiefenwerts um eine erste Tiefenskala (depth scale); und
• falls das digitale Bild entweder ein Hochfrequenz-Bild oder ein Niederfrequenz-Bild ist, Bestimmen - für jeden Tiefenwert, der einem Bildelement zugeordnet ist - eines jeweiligen tiefenskalierten Werts (depth scaled value) durch Reduzieren des Tiefenwerts mit oder um eine zweite Tiefenskala oder einen zweiten Tiefenwert (depth scale), wobei die erste Tiefenskala kleiner ist als die zweite Tiefenskala.

9. Einrichtung nach Anspruch 6, wobei der erste vorgegebene Schwellenwert sich von dem zweiten vorgegebenen Schwellenwert unterscheidet.

10. Einrichtung nach einem der Ansprüche 6 bis 9, wobei der Prozessor so ausgebildet oder konfiguriert ist, dass er bestimmt, ob das Digitalbild ein Hochfrequenz-Bild oder ein Niederfrequenz-Bild ist, wobei sie (die Ausbildung oder Konfiguration) umfasst
• Bestimmen, dass das Digitalbild ein Hochfrequenz-Bild ist, wenn der erste Wert einen ersten Frequenz-Schwellenwert überschreitet;
• Bestimmen, dass das digitale Bild ein Niederfrequenz-Bild ist, wenn der zweite Wert einen zweiten Frequenz-Schwellenwert überschreitet, wobei der zweite Frequenz-Schwellenwert sich von dem ersten Frequenz-Schwellenwert unterscheidet.

## Revendications

1. Procédé de détermination d'une image de profondeur (231) pour une image numérique (201) comprenant une pluralité d'éléments d'image, le procédé comprenant:
- le filtrage de contour (210) de l'image numérique pour déterminer une carte de contour, la carte de contour (211) comprenant une pluralité de valeurs de contour, dans lequel chaque valeur de contour est associée à au moins un élément d'image ;
- la détermination (220), pour chaque région de carte de contour d'une pluralité de régions de carte de contour, d'une métrique de région de carte de contour, dans lequel la métrique de région de carte de contour pour chaque région de carte de contour comprend le nombre de valeurs de contour élevées et le nombre de valeurs de contour basses dans la région de carte de contour respective ;
- la détermination pour chaque région de carte de contour du fait que la métrique de région de carte de contour respective satisfait un critère prédéfini, dans lequel le critère prédéfini est satisfait quand le nombre de valeurs de contour élevées dépasse une première valeur de seuil de contour prédéfinie et le critère prédéfini n'est pas satisfait quand le nombre de valeurs de contour basses dépasse une deuxième valeur de seuil de contour prédéfinie ;
- la détermination du nombre de régions de carte de contour pour lesquelles la métrique de région de carte de contour respective satisfait le critère prédéfini comme une première valeur ;
- la détermination du nombre de régions de carte de contour pour lesquelles la métrique de région de carte de contour respective ne satisfait pas le critère prédéfini comme une deuxième valeur ; et
- la détermination (230) de l'image de profondeur en utilisant la première valeur et la deuxième valeur, dans lequel les valeurs de profondeur de l'image de profondeur sont déterminées en utilisant les valeurs de contour de la carte de contour via une fonction de mappage linéaire par morceaux.

2. Procédé selon la revendication 1, dans lequel la détermination de l'image de profondeur comprend :
- la détermination pour chaque élément d'image associé à une valeur de profondeur du fait que l'élément d'image est situé dans une région de carte de contour pour laquelle la métrique de région de carte de contour respective satisfait le critère prédéfini ;
- dans un cas où l'élément d'image est situé dans une région de carte de contour pour laquelle la métrique de région de carte de contour respective satisfait le critère prédéfini, la réduction de la valeur de profondeur associée d'une première valeur d'adaptation de bruit de fond pour déterminer une valeur de profondeur adaptée au bruit de fond ;
- dans un cas où l'élément d'image est situé dans une région de carte de contour pour laquelle la métrique de région de carte de contour respective ne satisfait pas le critère prédéfini, la réduction de la valeur de profondeur associée d'une deuxième valeur d'adaptation de bruit de fond pour déterminer une valeur de profondeur adaptée au bruit de fond, dans lequel la deuxième valeur d'adaptation de bruit de fond est inférieure à la première valeur d'adaptation de bruit de fond ;
- dans lequel l'image de profondeur comprend les valeurs de profondeur adaptées au bruit de fond respectivement déterminées.

3. Procédé selon l'une quelconque des revendications 1 ou 2, dans lequel la détermination de l'image de profondeur comprend :
- la détermination du fait que l'image numérique est une image à haute fréquence ou une image à basse fréquence sur la base de la première valeur et de la deuxième valeur ;
- dans un cas où l'image numérique n'est ni une image à haute fréquence ni une image à basse fréquence, la détermination, pour chaque valeur de profondeur associée à un élément d'image, d'une valeur mise à l'échelle en profondeur respective en réduisant la valeur de profondeur d'une première échelle de profondeur ; et
- dans un cas où l'image numérique est soit une image à haute fréquence soit une image à basse fréquence, la détermination, pour chaque valeur de profondeur associée à un élément d'image, d'une valeur mise à l'échelle en profondeur respective en réduisant la valeur de profondeur d'une deuxième échelle de profondeur, dans lequel la première échelle de profondeur est inférieure à la deuxième échelle de profondeur.

4. Procédé selon la revendication 1, dans lequel la première valeur de seuil de contour prédéfinie est différente de la deuxième valeur de seuil de contour prédéfinie.

5. Procédé selon l'une quelconque des revendications 1 à 4, dans lequel la détermination du fait que l'image numérique est une image à haute fréquence ou une image à basse fréquence comprend :
- la détermination du fait que l'image numérique est une image à haute fréquence dans le cas où la première valeur dépasse une première valeur de seuil de fréquence ;
- la détermination du fait que l'image numérique est une image à basse fréquence dans le cas où la deuxième valeur dépasse une deuxième valeur de seuil de fréquence, la deuxième valeur de seuil de fréquence étant différente de la première valeur de seuil de fréquence.

6. Dispositif (100, 1210) pour la détermination d'une image de profondeur (231) pour une image numérique (201) comprenant une pluralité d'éléments d'image, le dispositif comprenant :
- un filtre de contour configuré pour filtrer (210) l'image numérique pour déterminer une carte de contour, la carte de contour (211) comprenant une pluralité de valeurs de contour, dans lequel chaque valeur de contour est associée à au moins un élément d'image ;
un processeur (103) configuré pour
- déterminer (220), pour chaque région de carte de contour d'une pluralité de régions de carte de contour, une métrique de région de carte de contour, dans lequel la métrique de région de carte de contour pour chaque région de carte de contour comprend le nombre de valeurs de contour élevées et le nombre de valeurs de contour basses dans la région de carte de contour respective ;
- déterminer pour chaque région de carte de contour le fait que la métrique de région de carte de contour respective satisfait un critère prédéfini, dans lequel le critère prédéfini est satisfait quand le nombre de valeurs de contour élevées dépasse une première valeur de seuil de contour prédéfinie et le critère prédéfini n'est pas satisfait quand le nombre de valeurs de contour basses dépasse une deuxième valeur de seuil de contour prédéfinie ;
- déterminer le nombre de régions de carte de contour pour lesquelles la métrique de région de carte de contour respective satisfait le critère prédéfini comme une première valeur ;
- déterminer le nombre de régions de carte de contour pour lesquelles la métrique de région de carte de contour respective ne satisfait pas le critère prédéfini comme une deuxième valeur ;
- déterminer l'image de profondeur (230) en utilisant la première valeur et la deuxième valeur, dans lequel les valeurs de profondeur de l'image de profondeur sont déterminées en utilisant les valeurs de contour de la carte de contour via une fonction de mappage linéaire par morceaux.

7. Dispositif selon la revendication 6, dans lequel le processeur est configuré pour déterminer l'image de profondeur de manière à comprendre :
- la détermination, pour chaque élément d'image associé à une valeur de profondeur, du fait que l'élément d'image est situé dans une région de carte de contour pour laquelle la métrique de région de carte de contour respective satisfait le critère prédéfini ;
- dans un cas où l'élément d'image est situé dans une région de carte de contour pour laquelle la métrique de région de carte de contour respective satisfait le critère prédéfini, la réduction de la valeur de profondeur associée d'une première valeur d'adaptation de bruit de fond pour déterminer une valeur de profondeur adaptée au bruit de fond ;
- dans un cas où l'élément d'image est situé dans une région de carte de contour pour laquelle la métrique de région de carte de contour respective ne satisfait pas le critère prédéfini, la réduction de la valeur de profondeur associée d'une deuxième valeur d'adaptation de bruit de fond pour déterminer une valeur de profondeur adaptée au bruit de fond, dans lequel la deuxième valeur d'adaptation de bruit de fond est inférieure à la première valeur d'adaptation de bruit de fond ;
- dans lequel l'image de profondeur comprend les valeurs de profondeur adaptées au bruit de fond respectivement déterminées.

8. Dispositif selon l'une quelconque des revendications 6 ou 7, dans lequel le processeur est configuré pour déterminer l'image de profondeur de manière à comprendre :
- la détermination du fait que l'image numérique est une image à haute fréquence ou une image à basse fréquence sur la base de la première valeur et de la deuxième valeur ;
- dans un cas où l'image numérique n'est ni une image à haute fréquence ni une image à basse fréquence, la détermination, pour chaque valeur de profondeur associée à un élément d'image, d'une valeur mise à l'échelle en profondeur respective en réduisant la valeur de profondeur d'une première échelle de profondeur ; et
- dans un cas où l'image numérique est soit une image à haute fréquence soit une image à basse fréquence, la détermination, pour chaque valeur de profondeur associée à un élément d'image, d'une valeur mise à l'échelle en profondeur respective en réduisant la valeur de profondeur d'une deuxième échelle de profondeur, dans lequel la première échelle de profondeur est inférieure à la deuxième échelle de profondeur.

9. Dispositif selon la revendication 6, dans lequel la première valeur de seuil de contour prédéfinie est différente de la deuxième valeur de seuil de contour prédéfinie.

10. Dispositif selon l'une quelconque des revendications 6 à 9, dans lequel le processeur est configuré pour déterminer le fait que l'image numérique est une image à haute fréquence ou une image à basse fréquence de manière à comprendre :
- la détermination du fait que l'image numérique est une image à haute fréquence dans le cas où la première valeur dépasse une première valeur de seuil de fréquence ;
- la détermination du fait que l'image numérique est une image à basse fréquence dans le cas où la deuxième valeur dépasse une deuxième valeur de seuil de fréquence, la deuxième valeur de seuil de fréquence étant différente de la première valeur de seuil de fréquence.
